# EUROPEAN PATENT APPLICATION

(11) **EP 4 715 593 A1**
(43) Date of publication of application: **25.03.2026**
(21) Application number: 25151121.8
(22) Date of filing: 10.01.2025
(51) Int. Cl.: G06F 9/50

(54) **DYNAMIC ZERO AUTO-SCALING OF KUBERNETES WORKLOADS BASED ON REAL-TIME ACTIVITY DETECTION**

(30) Priority: 20.09.2024 EP 24201536
(71) Applicant: Abouali, Tarik, 11000 Sale (MA); Abergel, Laurent, London W148BU (GB); Lemaire, Nicolas, 75019 Paris (FR)
(72) Inventor: Abouali, Tarik, 11000 Sale (MA); Abergel, Laurent, London W148BU (GB); Lemaire, Nicolas, 75019 Paris (FR)
(74) Representative: Weisse, Moltmann & Willems PartGmbB

(57) **Abstract**

The application relates to a system and method for dynamically auto-scaling containerized workloads, especially Kubernetes, to reduce resources and costs. The system includes monitoring, scaling, and logging modules. Workloads scale up when activity is detected and down to zero when inactive, adjusting the number of replicas based on real-time data such as network requests.Compatible with both cloud and on-premises environments, the system and method allow flexible configuration.

## Description

The present application relates to a computer implemented system and method for dynamically auto-scaling containerized application workloads, such as Kubernetes workloads, based on real-time activity detection.

### BACKGROUND AND PRIOR ART

Generally, containerized application workloads refer to applications or services in isolated environments, known as containers, allowing for consistent operation and scaling across various platforms.

Kubernetes workloads specifically refer to applications managed within Kubernetes, a popular container orchestration platform that allows users to manage the deployment, scaling, and operation of containerized applications. Within Kubernetes, these workloads often consist of one or more pods - the smallest deployable units, which encapsulate containers and enable finer control over application scaling and resource allocation.

In Kubernetes clusters, which are composed of multiple nodes (physical or virtual machines that host workloads), managing workloads is a common challenge due to fluctuating resource demands. Each workload may have multiple replicas, which represent the number of instances or copies of a workload running within the cluster to meet application demand and ensure availability.

Workloads such as deployments, stateful sets, and daemon sets often remain idle during periods of low activity, yet consume valuable resources, leading to unnecessary operational costs. Node group scaling presents additional complexity, as adjusting the number of nodes requires careful coordination with the workloads to ensure no service interruptions occur.

Traditional Kubernetes auto-scaling tools, such as the Horizontal Pod Autoscaler (HPA) and Cluster Autoscaler, provide mechanisms for scaling workloads based on resource usage (CPU, memory) or scaling nodes. However, these solutions are limited in their ability to scale workloads to zero based on real-time activity. For example:
a. Horizontal Pod Autoscaler: Adjusts replicas based on CPU or memory usage but does not scale workloads to zero during periods of inactivity.
b. Cluster Autoscaler: Manages the scaling of nodes based on resource consumption but does not manage the workloads directly or adjust based on workload activity.

US 20230114504 A1 discloses an auto-scaling system and method for containers in cloud environments that dynamically adjusts resources based on workload metrics and system resource usage. While it addresses performance optimization and resource efficiency, it does not enable scaling workloads to zero during inactivity.

The cited US publication contains a wide range of basic information in the technical field of containerized application workloads, and its content is incorporated into this application by reference.

### OBJECT OF THE INVENTION

The object of the invention was therefore to eliminate the disadvantages of the prior art and to provide a more efficient scaling solutions that respond dynamically to workload activity and reduce computing resources and, accordingly, carbon footprint.

### DISCLOSURE OF THE INVENTION

The object of the invention is solved by the features of the independent claims. Advantageous embodiments of the invention are described in the dependent claims.

In a first aspect, the application relates to a computer-implemented system for dynamically auto-scaling containerized application workloads, such as Kubernetes workloads. The system comprises a monitoring module, a scaling module, a scale-down mechanism, a scale-up mechanism and a logging module.

The monitoring module is configured to continuously collect activity metrics of containerized application workloads, including network requests. Based on the metrics collected, the scaling module dynamically adjusts the number of replicas for deployments, stateful sets, and daemon sets to match detected activity. When no activity is detected for a predetermined duration, the scale-down mechanism automatically reduces the number of replicas to zero. Conversely, when activity is detected after the scale-down to zero, the scale-up mechanism increases the number of replicas accordingly. To ensure a comprehensive record of these adjustments, the logging module captures and stores details of scaling events, including the timestamps of scaling up and scaling down actions.

This proposed system provides in particular an intelligent, real-time system for managing Kubernetes workloads (deployments, stateful sets, and daemon sets) through activity-based auto-scaling. The system preferably continuously monitors workload activity, focusing on incoming network requests. When no activity is detected for a specified period, the system preferably scales the workload down to zero replicas, freeing up compute resources. Conversely, when activity is detected, the system preferably scales the workload back up to meet demand.

Accordingly, the proposed system reduces energy consumption of applications using containerized application workloads and lowers the overall carbon footprint by minimizing the use of resources during periods of inactivity.

Compared to the prior art, the proposed system differs significantly in that it scales workloads to zero when no activity (e.g., network requests) is detected, ensuring that resources are not consumed unnecessarily, dynamically scales workloads back up when activity is detected, allowing for fast response times without manual intervention and provides persistent configuration for scaling behaviors, such as scale-down durations, and maintains a scaling history for auditing purposes.

Existing solutions primarily rely on resource metrics for scaling, such as CPU and memory usage. This approach risks falsely identifying a workload as "inactive" during low resource usage, even if requests are still being processed. Conversely, it may keep pods active with minimal resource use, despite no real user activity. Scaling down to zero requires precise inactivity detection. Without network metrics, the systems of the prior art relies on assumptions, potentially compromising scale-down reliability and leading to unwanted behavior.

Generally, a computer-implemented system may refer to an integrated combination of hardware and software components that work together to perform specific tasks or functions. In this regard, the software runs in particular on a computer platform. The system typically includes one or more data processing units, such as processors or virtual machines, responsible for data processing, as well as memory and network infrastructure to store and transmit information efficiently. The one or more data processing units and the memory and network infrastructure are preferably configured to execute and/or provide the functionality of the aforementioned modules and mechanisms.

Accordingly, all modules included in the system can be a combination of hardware and software that fulfill specific tasks of the system. It should be understood that each module can also be purely hardware or purely software. On the hardware side, a module may include a data processing unit, a memory, and/or a communication unit.

The system may rely on server or compute resources, which include physical machines that host Kubernetes clusters and run the containerized applications. The system dynamically adjusts and scales workloads across these resources based on real-time activity detection. Additionally, networking hardware or infrastructure, such as routers and switches, may manage the network traffic, which the system continuously monitors to detect activity and adjust resource allocation accordingly. Furthermore, storage components, including databases and storage devices or memories, are preferably used for logging events and storing configuration data. This allows the system to maintain a history of scaling actions and ensure the persistence of scaling parameters.

In this arrangement, the hardware provides the physical foundation, while the software components, such as monitoring, and scaling modules, may be responsible for executing the system's functions. These modules may continuously monitor workloads, detect real-time activity, and dynamically adjust hardware resources by scaling workloads up or down based on demand, thereby optimizing the efficient use of hardware resources.

Furthermore, the system is preferably designed to function across diverse environments, including cloud computing, Platform as a Service (PaaS), Infrastructure as a Service (laaS), on-premises, and bare metal servers, provided they support Kubernetes. This adaptability ensures compatibility with various hardware configurations.

In a cloud computing environment, resources like processing power, storage, and network connectivity are preferably centrally managed in large data centers and accessed over the internet. Cloud environments typically organize resources into nodes, which are preferably individual server units in, for example, a Kubernetes cluster. These nodes may run on virtualized infrastructure, where applications operate inside virtual machines. Each virtual machines may be managed by a hypervisor, a software layer that allocates physical resources (such as CPUs and memory) to the virtual machines. This virtualization allows cloud platforms to efficiently scale resources up or down to match demand.

In a Platform as a Service (PaaS) setup, the platform provider may take care of most infrastructure management. PaaS may provide a managed environment for developing and deploying applications, where nodes and the underlying infrastructure are controlled by the provider. Kubernetes clusters in a PaaS environment can scale automatically, making node and infrastructure management simpler for the provider.

With Infrastructure as a Service (laaS), users may have more control over basic computing resources, such as virtual machines, storage, and networking. This flexibility allows users to configure and manage nodes directly. Kubernetes clusters in an laaS setup can be customized to meet the needs of specific applications.

In on-premises environments, all hardware, including nodes, is preferably managed within an organization's own facility. This setup may operate independently of external cloud providers, giving the organization full control over the infrastructure and the Kubernetes clusters it hosts. This allows for strict data security and private data management.

Bare metal servers are preferably physical machines that provide dedicated, non-virtualized hardware resources. Nodes running on bare metal servers may be ideal for workloads that need high performance or low latency, as they may avoid the overhead associated with virtual machines. This setup is especially suited for Kubernetes applications that require direct access to hardware for intensive computing tasks.

Each compute node - whether virtual or physical - may comprise essential hardware components such as CPUs (processors), memory, network interface cards (NICs), and disk drives (which may include SSDs, HDDs, or a combination of both). These nodes may run a host operating system (OS) to manage the hardware resources. In virtualized environments, the node may also include a hypervisor that shares and manages the physical hardware, allowing multiple virtual environments to run on the same physical machine. Some hypervisors may utilize hardware-assisted virtualization, which enhances performance by leveraging specific features of the CPU to support virtualization more efficiently.

In Kubernetes, applications run inside containers, which are isolated environments designed to keep applications consistent across different nodes. Containers are grouped into pods, which are the smallest deployable units in Kubernetes. Each pod can contain one or more containers, allowing Kubernetes to manage and scale applications effectively across nodes in any of the supported environments.

In this regard, the proposed system can run on Kubernetes clusters hosted on cloud platforms like AWS, Azure, or Google Cloud, which offer scalable virtual servers and storage resources. Further, the system can be deployed on on-premises Kubernetes clusters within corporate data centers, using physical or virtual machines.lt can also be implemented in hybrid setups where cloud-based workloads interact with on-premise workloads, providing seamless monitoring and scaling in both environments.

In the context of the application, the system is suitable for dynamically auto-scaling containerized application workloads. This in particular may refer to the automated adjustment of the number of replicas of containerized application workloads, such as deployments, stateful sets, or daemon sets, based on real-time activity detection. This involves increasing the number of replicas when activity, such as incoming network requests, is detected, and reducing the number of replicas to zero when no activity is present. The system continuously monitors workload activity and performs these adjustments to optimize resource usage and ensure efficient operation without manual intervention.

In other words, the system preferably may utilize a central controller that periodically checks the state of workloads and manages scaling actions. Additionally, a history of scaling events is preferably logged to provide transparency and auditability. The scaling events may include information about the namespace, deployment name, number of replicas, and timestamps for scaling actions.By dynamically adjusting resources, this system optimizes cloud infrastructure costs while maintaining performance during peak usage.

The central controller may be understood as a control module for controlling the containerized application workloads. In this respect the scaling module may be configured to interact with the control module to manage Deployment, StatefulSet, and DaemonSet resources and adjust the replicas according to observed network metrics.

As described above, the monitoring module is preferably configured to continuously collect activity metrics of containerized application workloads, including network requests. In this regard, the monitoring module may interface with external application programming interfaces (API), proxy servers, or metrics servers to retrieve workload activity data.The activity metrics may include network request counts, connection attempts, and any other relevant activity indicators.The system is capable of supporting various metrics sources, allowing it to interface with different APIs depending on the infrastructure in use.

Preferably, the system continuously monitors Kubernetes workloads or the activity of workloads, including deployments, stateful sets, and daemon sets,through a periodic task. In other words, the system preferably runs a function called "RunWorkloadAutoScaling", which periodically checks the state of workloads and triggers scaling actions based on activity.

Furthermore, the proposed system may use a function called "ShowMetrics" to gather metrics related to workload activity. Metrics such as network requests are analyzed to determine whether a workload is active or idle. When no activity is detected for a predefined duration, the module preferably triggers the scaling module to scale the workload down to zero replicas.

In a further preferred embodiment, the monitoring module is configured to analyze the collected metrics and to determine when to scale workloads down to zero or up based on predefined period (or thresholds) and policies.

Predefined thresholds are preferably specific values set to trigger scaling actions based on real-time metrics. For instance, a network request threshold might scale up the workload if 1 request per second are detected, while reducing replicas to zero when requests fall to 0 per second during the idle time threshold(workloads inactivity). Additionally, an idle time threshold could scale down to zero replicas if no activity, such as network requests, is detected for 15 minutes, conserving resources during periods of inactivity. These thresholds ensure that the system dynamically adjusts resources based on actual demand, optimizing performance and resource efficiency.

In the context of the proposed system, policies preferably refer to configurable rules or guidelines that govern scaling actions based on predefined metrics, thresholds, and operational requirements. These policies may define the conditions under which workloads are scaled up or down, such as specific activity levels (like network request frequency) and resource utilization thresholds. Policies enable customization to suit different application needs and operational objectives, such as cost optimization, performance, and response times. For example, a policy might specify the duration of inactivity required to trigger a scale-down to zero replicas, the maximum number of replicas allowed during high demand, or the prioritization of workloads to be scaled in cases of resource contention. By setting these parameters, policies allow the system to dynamically adjust resources based on real-time activity while ensuring alignment with organizational and performance requirements.

In addition, analysis to determine when to scale workloads up or down can also be achieved using artificial intelligence algorithms. Based on training data, the AI algorithm can dynamically recognize when to scale up or down depending on the situation.

In a further preferred embodiment, the monitoring module is configured to detect and monitor all services running within logical groupings of resources in the containerized environment, excluding predefined groupings reserved for system operations and any additional groupings or services designated for exclusion by user-defined configurations.

The term "logical groupings of resources" is preferably used to refer to structures within containerized environments, such as Kubernetes namespaces, without being limited to a specific term. The monitoring module is designed to oversee and collect metrics from all services running in these logical groupings, while purposefully excluding specific groupings reserved for essential system operations (e.g., namespaces like kube-system in Kubernetes) to prevent unnecessary monitoring of internal system services. Additionally, the system allows users to define and specify additional groupings or services that should be excluded from monitoring, providing flexibility and customization to accommodate different environments and requirements.

Services in Kubernetes are often organized through logical groupings, such as namespaces. A namespace can contain multiple services and their associated workloads, simplifying management and monitoring. Users can define which services, and logical groupings should be excluded from monitoring to manage resources selectively and efficiently.

Moreover, the monitoring module may continuously check for the presence of new services within these logical groupings and may dynamically update a configuration used for collecting metrics to incorporate these new services as they are detected. This dynamic adjustment ensures that the monitoring remains comprehensive and up-to-date, without requiring manual intervention whenever a service is added.

A configuration used for collecting metrics can be a predefined set of settings that instructs the monitoring module on which data to collect (e.g., CPU, memory, network requests) and from which resources (e.g., specific services or namespaces). It may include parameters like metric types, collection frequency, and policies, allowing the monitoring module to gather and process relevant data efficiently and adaptively.

Further, the network layer may include proxy servers that handle incoming and outgoing traffic, collecting metrics and ensuring traffic routing. The proxy servers enable handling HTTP, TCP, and UDP traffic for both internal and external communication within the Kubernetes cluster.

Additionally, the monitoring module may be configured to collect traffic-related metrics for the services detected within the logical groupings of resources, gathering these metrics by sending HTTP requests to a metric service associated with a proxy server that aggregates data such as request counts, connection attempts, and error occurrences or potential errors. This setup allows the monitoring module to gain detailed insights into service performance by tracking both the volume and success rate of incoming traffic. By capturing metrics on failed requests and error rates in addition to successful connections, the system can more accurately detect issues, optimize resource allocation, and potentially trigger alerts or scaling actions in response to demand or errors.

In other words, the monitoring module may utilize a logical grouping configured to retrieve and analyze network traffic metrics collected by a metric service and associated proxy servers, ensuring accurate monitoring and supporting informed scaling decisions based on aggregated statistics.

In a further preferred embodiment, a logical grouping is configured to parse the collected metrics to evaluate workload activity. If the count of successful network requests has not increased or if the last request occurred outside a predefined allowable time window, the logical grouping may initiate a scale-down operation upon meeting this condition. Conversely, the logical grouping may also be configured to detect connection failures when a workload is scaled down and, in response, trigger a scale-up operation to ensure the workload remains available and responsive.

In a further preferred embodiment, the proxy server dynamically collects metrics, including request rates, latency, and failures, for all types of network traffic handled by the containerized workloads. The monitoring module may employ proxy servers configured as intermediate data collectors, forwarding traffic to workloads while recording metrics like request rates, latency, and failures.

Furthermore the proxy server may be configured to operate across all protocol layers, providing a comprehensive view of network activity. The proxy servers may forward network traffic to the containerized workloads while simultaneously capturing and recording metrics to inform scaling decisions without disrupting the normal flow of traffic.

The monitoring module can further be configured to interface with a performance metrics service to obtain insights into workload performance, network activity, and resource usage. The monitoring module may retrieve information on the number of replicas and their statuses from the metrics service, providing a real-time view of traffic patterns and supporting scaling decisions based on observed traffic volumes.

An example of this is the integration of the monitoring module with the Kubernetes Metrics API, which enables retrieval of data on current workload activity, network interactions, and resource utilization of containerized applications within the Kubernetes cluster. Through this interface, the monitoring module can retrieve the number of replicas and their statuses, offering a real-time perspective on traffic patterns and aiding in scaling decisions informed by observed traffic volumes.

The collected metrics from network traffic are analyzed in real-time, and the system, in particular the monitoring module may determine that a workload is inactive and triggers a scale-down to zero if a lack of traffic activity is detected for a specified duration. If network traffic resumes while a workload is scaled down, the system quickly scales it back up to minimize latency and ensure optimal responsiveness.

In this regard a scaling module is provided that is capable of dynamically adjusting the number of replicas for deployments, stateful sets, and daemon sets based on detected activity and/or on real-time traffic patterns.A scale-down mechanism may reduce the number of replicas to zero when no activity is detected automatically or for a predetermined duration anda scale-up mechanism may increase the number of replicas when activity is detected after scaling down to zero.

The system's scale-down duration is by default predefined and configurable by user based on the workload's needs and environment. The predetermined duration may be stored in persistent storage.The duration can be modified via the system's user interface module, allowing users to customize the idle period based on workload requirements. For instance, users can set the scale-down duration to values like 5 minutes, 10 minutes, or any other desired interval.

For an e-commerce website, a scale-down might occur after 20 minutes of inactivity, while a database backend could scale down after 60 minutes to account for periodic traffic or system maintenance. In development environments, a scale-down duration of 10 minutes might be used to quickly free up resources during testing and experimentation. These durations can be adjusted by administrators through the system's API or user interface, depending on workload behavior and resource optimization goals.

The system preferably determines when to scale down workloads based on the collected metrics. If the request success count remains constant, indicating no new requests within the predetermined idle period, the system scales the workload down to zero replicas. The system may scale down deployments, stateful sets, and daemon sets by adjusting the replicas to zero or modifying a node selector to redirect traffic, depending on the resource type.

When the system detects new incoming requests or connection failures while a workload is scaled down, it may trigger a scale-up by increasing the replicas to 1.lt dynamically updates the workloads to handle the incoming network requests, ensuring minimal latency when scaling back up.

In a further preferred embodiment, the system uses Kubernetes native scaling API to adjust the number of replicas for each workload. For example, the system uses kubectl scale commands or direct API calls to Kubernetes to set the desired replica count to zero or more.The system can scale deployments, stateful sets, and daemon sets, making it applicable to a wide range of Kubernetes workloads.

In a further preferred embodiment, the scale-down duration and other scaling parameters are configurable by the user and stored in a persistent database (e.g., MongoDB).Administrators or users can adjust these settings through an API or an user interface module, allowing flexibility in tuning the scaling behavior based on the environment.

As described above, the logging module is configured to record scaling events, including scaling up, scaling down, and associated timestamps.

In particular, the logging module maintains a history of all scaling events, including scaling up and scaling down actions.Each log entry may record the timestamp of the event, the workload name (e.g., deployment, stateful set, daemon set), namespace and the number of replicas during the scaling action.This information is preferably stored for auditing purposes and can be queried by administrators for monitoring and optimization of scaling behaviors.

In a further preferred embodiment, the system may comprise a user interface module to interact with the system for monitoring, scaling, and logging configurations.This interface module can take various forms, including software interfaces (such as dashboards, web applications, or API clients) and physical input devices (such as control panels or touchscreens) that enable users to engage with the system effectively.

In a further preferred embodiment, all scaling actions are logged in a centralized database and log file,ensuring an audit trail is maintained for compliance and optimization. Each log entry contains the namespace, workload name, the time of the scaling event, and the replica count before and after the scaling action.

The concrete application of the proposed system is explained in the following examples.

In a first example, a Kubernetes deployment managing an e-commerce website experiences significant traffic during business hours but remains idle overnight. The system detects that no network requests have been made to the workload for 30 minutes and scales the deployment down to zero replicas, freeing up compute resources. When the first request is made the next morning, the system detects the activity and scales the deployment back up to one replica to handle the incoming traffic.

In a second example, a stateful set used for managing a database backend in a cloud environment remains idle during off-peak hours. The system continuously monitors the stateful set and, after detecting no activity for one hour, scales the stateful set down to zero. When an application requires access to the database, the system scales the stateful set back up to its minimum replica count.

In a third example, a video streaming service experiences high demand during peak viewing hours and lower demand during off-peak times. The system scales down idle video processing and transcoding services to zero during low-demand hours (e.g., early mornings), saving resources and reducing the carbon footprint. When a user initiates a video stream, the system detects the incoming network traffic and scales the transcoding service back up to handle the request efficiently.

In a fourth example, in development and testing environments, workloads such as continuous integration (CI) pipelines can consume significant resources. The system scales down CI services after 15 minutes of inactivity, preventing resource waste during idle periods. When a new build is triggered, the system immediately scales the services back up to handle the build process.

In a fifth example, an loT system aggregates data from various sensors. When no data is received from the sensors for a specified period (e.g., 1 hour), the system scales down data aggregation and analysis workloads. When new sensor data is detected, the system scales these services back up, allowing real-time data processing to resume seamlessly.

In a final example, the system manages API endpoints for real-time financial data, scaling down idle endpoints during inactive periods and scaling them back up rapidly when trading activities resume.

Accordingly, the application relates to the use of the proposed system, or a corresponding method, in managing various environments such as e-commerce websites, cloud-based database backends, video streaming services, development and testing environments, and loT systems. This approach optimizes resource usage, improves system responsiveness, and supports a reduction in operational costs and environmental impact.

The proposed system can also be explained through its operational flow, which includes several steps: initialization, monitoring and detection, scaling down, scaling up, and logging and auditing.

In the first step, initialization, the system is configured with predefined settings, such as the idle duration before scaling down to zero, monitoring intervals, and activity detection parameters. Once initialized, the monitoring module begins collecting metrics from external APIs, proxy servers, or a metrics server.

In the second step, monitoring and detection, the system continuously retrieves activity metrics, such as network requests, to assess whether workloads are active or idle. If a workload shows no activity for a duration defined either automatically or by the user, the system marks it as idle based on the configured idle duration.

The third step is scaling down, where the system scales down workloads to zero replicas once it detects they have been idle for the configured duration. This action is logged, with details such as the timestamp, workload name, and the transition to zero replicas.

Following that, in scaling up, the monitoring module continues to check for new activity, such as incoming network requests. If new activity is detected, the system scales the workload back up to one or more replicas, logging the event with the timestamp, namespace, workload name, and new replica count.

Lastly, in the logging and auditing step, every scaling event is recorded, including the workload's state before and after scaling. These logs are stored for auditing and optimization purposes, allowing them to be queried based on time intervals, workload types, or other filters to analyze performance and identify potential improvements.

The above-described embodiments may be combined with the following enhancements.

In a preferred embodiment, the system may further include real-time traffic-based scaling mechanisms to dynamically adjust resources based on live traffic patterns, incorporating fail-safe measures to ensure stability. The system may implement continuous real-time monitoring of live network traffic metrics, enabling precise resource allocation in response to traffic demand.

In the context of the application, traffic patterns may refer to the specific characteristics and behaviors of network traffic, such as incoming requests, connection attempts, data transfers, or error rates. These patterns can be continuously monitored to analyze the activity of containerized workloads and make real-time scaling decisions.

Fail-safe measures may refer to mechanisms or protocols designed to ensure system stability and reliability, even in the event of unexpected errors, failures, or extreme conditions. For instance, these measures could include fallback strategies, such as maintaining a minimum replica count during scaling operations, implementing retries for failed scaling actions, or configuring thresholds to prevent over-scaling or under-scaling, thereby safeguarding the system's functionality and preventing service disruptions.

Furthermore, the system may incorporate configurable thresholds and policies, allowing users to define precise trigger points for scaling actions, such as handling burst traffic scenarios or maintaining minimum baseline resource requirements.

In a further preferred embodiment, the system may feature an advanced Scaling-to-Zero Mechanism. This mechanism may implement activity-based retention policies that allow specific workload components to remain in a semi-active state, optimizing resource recovery times.

The system may also incorporate sustainability monitoring tools to track and minimize CO2 emissions across multiple operational levels, supported by actionable recommendations.

Energy and carbon metrics tracking may provide comprehensive instrumentation to monitor energy consumption at the pod, node, and cluster levels, while also tracking and reporting carbon emissions using geographic energy usage profiles and region-specific carbon intensity data.

Sustainability recommendations may deliver actionable insights to reduce the carbon footprint, such as suggesting alternative cloud regions with lower carbon intensity or optimizing workload schedules to utilize off-peak energy. Additionally, gamification elements may be introduced, enabling organizations to set sustainability goals and track progress through interactive dashboards.

In another preferred embodiment, the system may integrate seamless multi-cloud and hybrid cloud support for unified workload management and live migration capabilities. This integration enables consistent deployment and management across major cloud providers, supported by APIs for automated workload migration that facilitate live failover and smooth transitions during outages or resource contention. Furthermore, advanced networking solutions may bridge communication between on-premise and cloud workloads, ensuring secure and low-latency data exchange. Hybrid orchestration may enable simultaneous resource scaling across on-premise and cloud nodes based on unified policies.

In a further preferred embodiment, the system may incorporate Al-driven predictive analytics for resource allocation, workload prioritization, and trend forecasting.

Resource allocation optimization may leverage machine learning models trained on historical workload patterns to predict resource demands. Additionally, it automatically adjusts resource allocations proactively to prevent bottlenecks or over-provisioning.

Workload prioritization may utilize intelligent algorithms to dynamically allocate resources to critical workloads during periods of contention. Additionally, user-defined rules may adjust prioritization logic to align with organizational policies or service-level agreements (SLAs).

In a further preferred embodiment, the system may comprise scheduled scaling that may accommodate conditional and calendar-based rules. Scheduled scaling may provide the ability to define detailed scaling schedules tailored to specific workload needs, such as peak business hours or batch processing windows. Furthermore, it may support conditional scheduling, where predefined rules automatically adjust the schedules based on observed metrics or organizational calendar inputs.

The system may further enhance user configurability through advanced dashboards, granular billing transparency, and predictive cost forecasting.

Granular billing metrics may provide cost attribution at the namespace, workload, and even individual pod levels, along with predictive cost forecasting tools to anticipate budget requirements based on usage trends.

Advanced dashboards may feature fully customizable interfaces, allowing users to select metrics and visualizations that align with their priorities. They may also include historical data analysis for identifying trends and evaluating retrospective performance.

An enterprise utilizing the enhancements described above can:
- Deploy a hybrid cloud environment where on-premise nodes handle sensitive workloads while cloud resources scale dynamically during traffic spikes.
- Leverage sustainability tools to identify high-carbon regions and migrate non-critical workloads to greener alternatives, achieving a 25% reduction in emissions.
- Use Al-based predictive analytics to prepare for a high-demand event by pre-warming resources and allocating them in advance, ensuring zero downtime.
- Customize dashboards to monitor real-time cost, performance, and sustainability metrics, allowing team-specific views for finance, operations, and engineering departments.

These enhancements significantly extend the system's capabilities, transforming it into a robust, versatile, and future-ready platform. By addressing the demands of modern infrastructure management, the enhancements ensure the containerized platform (KubeCut platform) remains at the forefront of operational efficiency, cost optimization, and sustainability

In a further aspect the application relates to a computer-implemented system for auditing scaling activities in containerized application workloads, such as Kubernetes workloads. The auditing system comprises a logging module that records every scaling event and a querying interface that retrieves scaling history based on user-defined filters such as time intervals or workload types.The auditing system offers two key advantages: enhanced transparency and optimization potential. By logging and enabling the retrieval of all scaling events, the system provides administrators and developers with clear visibility into historical scaling activities. Additionally, the ability to query scaling history based on user-defined filters - such as time intervals or workload types -supports the identification of inefficiencies and informs adjustments to scaling policies.

In a further aspect, the application relates to a computer-implemented method for dynamically auto-scaling containerized application workloads, such as Kubernetes workloads. The method uses one or more data processing units, such as processors or virtual machines, for data processing, as well as memory and network infrastructure to store and transmit information efficiently.

The method comprises the following method steps:
i. Continuously collecting activity metrics of containerized application workloads, including network requests;
ii. Dynamically adjusting the number of replicas for deployments, stateful sets, and daemon sets based on detected activity;
iii. Automatically reducing the number of replicas to zero when no activity is detected or after a predetermined duration;
iv. Increasing the number of replicas when activity is detected after scaling down to zero; and
v. Recording scaling events, including scaling up, scaling down, and associated timestamps.

The computer-implemented method provides operational efficiencies that save compute resources and reduce costs. The method's ability to dynamically scale the workload in response to detected activity ensures that the application can meet demand without manual intervention.

The skilled person will recognize that the advantages, technical effects and preferred embodiments discussed in connection with the system apply analogously to the method for dynamically auto-scaling containerized application workloads. Likewise, all the advantages, technical effects and preferred embodiments described in connection with the method are transferable to the system.

Further examples of embodiments are explained in more detail below with reference to the accompanying drawings. The application is not intended to be limited solely to these listed examples of embodiments. They merely serve to explain the application in more detail. The present application is intended to relate to all objects which the person skilled in the art would use now and, in the future, as obvious to realize the invention.

### BRIEF DESCRIPTION OF THE FIGURES

- **Fig. 1**: shows a functional block diagram of the components of an embodiment of the proposed system and their interactions.
- **Fig. 2**: shows a flowchart for an auto-scaling logic which demonstrates the decision-making process the proposed system uses to determine when to scale workloads up or down.
- **Fig. 3**: shows a diagram which illustrates how the proposed system interacts with Kubernetes workloads and various external APIs, proxy or metrics servers, which provide workload activity data.
- **Fig. 4**: shows a user interface dashboard.
- **Fig. 5**: shows a flowchart outlining a method for dynamically auto-scaling containerized application workloads.

### DETAILED DESCRIPTION OF THE FIGURES

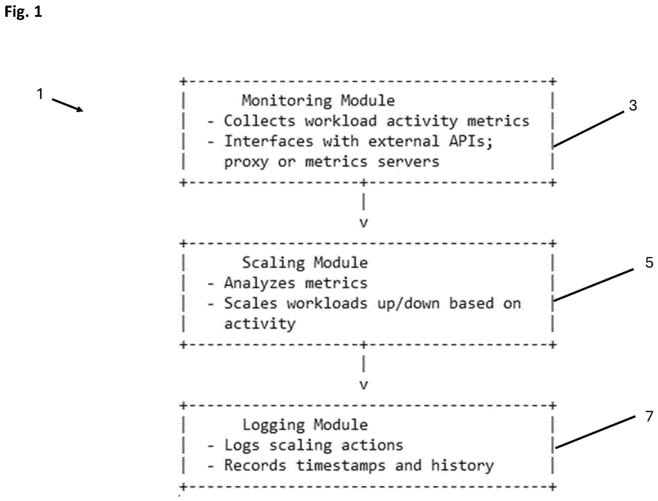

**Fig.** 1**Fig.** 1 shows a functional block diagram of the components of an embodiment of the proposed system 1 and their interactions.The system 1 is preferably composed of three main modules, namely a monitoring module 3, a scaling module 5 and a logging module 7.

Preferably, the monitoring module 3is responsible for collecting workload activity metrics by interfacing with external APIs, proxy servers or metrics servers. It continuously monitors the activity of Kubernetes workloads such as deployments, stateful sets, and daemon sets.

Based on the metrics collected, the scaling module 5 preferably dynamically adjusts the number of replicas for the workloads. It scales workloads down to zero when they are inactive for a predefined period and scales them back up when activity resumes.

The logging module 7 preferably logs all scaling actions, including scaling up and scaling down events. The logs preferably capture important data such as timestamps, workload names, and the number of replicas before and after scaling.

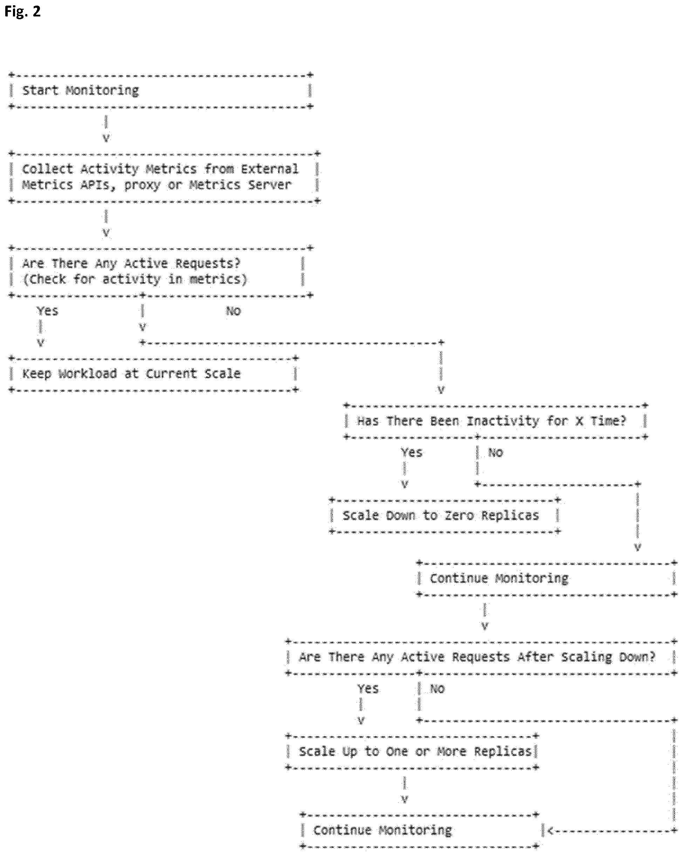

**Fig. 2** showsa flowchart for an auto-scaling logic which demonstrates the decision-making process the system 1 uses to determine when to scale workloads up or down.

The system 1 preferably starts by continuously monitoring the activity of Kubernetes workloads by collecting metrics from an external APIs, proxy or metrics servers.If the metrics indicate active requests, the system 1 preferably keeps the workload at its current scale.If there are no active requests for a predefined period, the system 1 preferably checks if the workload has been idle for long enough. If so, the system 1 preferably scales the workload down to zero replicas.

After scaling down, the system 1 preferably continues monitoring for any new activity. If new activity (such as incoming network requests) is detected, the system 1 preferably scales the workload back up to one or more replicas.

The system 1may then resumes monitoring the workload, ensuring that it can scale workloads up and down as needed, based on real-time activity.

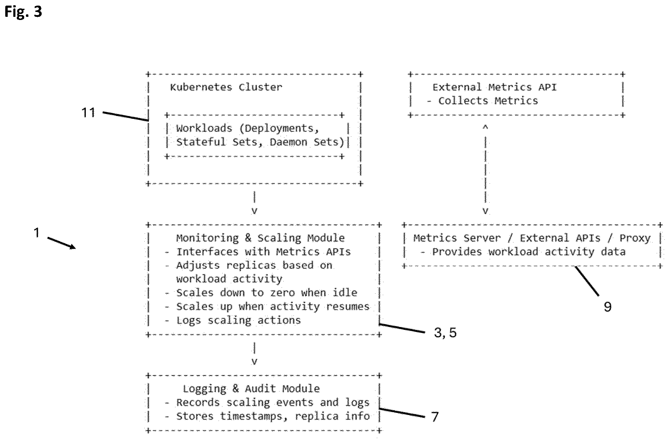

**Fig. 3**shows a diagram which illustrates how the proposed system 1 interacts with Kubernetes workloads and various external APIs, proxy or metrics servers 9, which provide workload activity data.

A Kubernetes cluster 11 preferably runs workloads such as deployments, stateful sets, and daemon sets. These workloads preferably interact with the monitoring andscaling module 3,5 to adjust their replica counts based on activity.

The system 1 preferably collects workload activity data from external APIs, proxy or metrics server 9. These external systems provide information such as network requests, resource usage, and other key metrics used to make scaling decisions.

The monitoring and scaling module 3,5 preferably interfaces with the external APIs, proxy servers or metrics server 9 to retrieve workload activity data. Based on the activity, it preferably dynamically adjusts the number of replicas for the workloads. It can scale down workloads to zero when they are idle and scale them back up when activity resumes.

All scaling events are preferably recorded in the logging module 7. This preferably includes data about the scaling actions, such as when a workload was scaled down or scaled up, and the number of replicas involved.

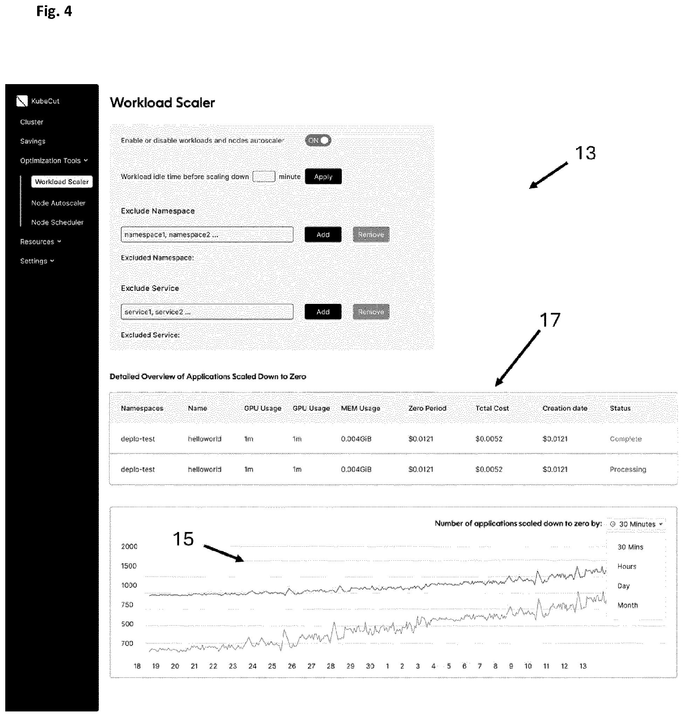

**Fig. 4** shows a user interface dashboard 13 that provides comprehensive information on workloads that have been scaled down to zero. This interface 13 uses API clients to interact with the system 1, allowing users to monitor workload status, adjust scaling parameters, and manage configurations effectively.

The user interface 13 offers several key functionalities. Users can enable or disable the automatic scaling down of workloads to zero and configure the idle time, measured in minutes, before the system 1 reduces a workload to zero replicas. Additionally, specific Kubernetes namespaces or services can be excluded from the automatic scaling management by the system's engine. Users have the flexibility to view, modify, and remove these exclusions as needed.

The dashboard 13 includes a detailed table 17 that summarizes essential metrics for applications scaled down to zero. The table 17 displays the namespace where each workload is deployed, the workload name, and the resource usage, including CPU, memory, and GPU consumption. It also shows the total duration, known as the "Zero Period," during which each workload has been scaled down to zero. The table 17 further provides an estimate of cost savings, calculated based on the zero period and the CPU, memory, and GPU usage costs relative to worker node expenses. Additionally, the creation date records when each workload was scaled down to zero, and the status column reflects the workload's current state. When a workload is scaled down to zero, the status automatically displays "Progressing," and upon scaling back up, the status updates to "Complete".

The user interface 13 also includes a line chart 15 that tracks the total number of applications scaled down to zero over different time intervals, such as every 30 minutes, hourly, daily, and monthly. This visualization supports trend analysis and helps assess the effectiveness of scaling actions over time.

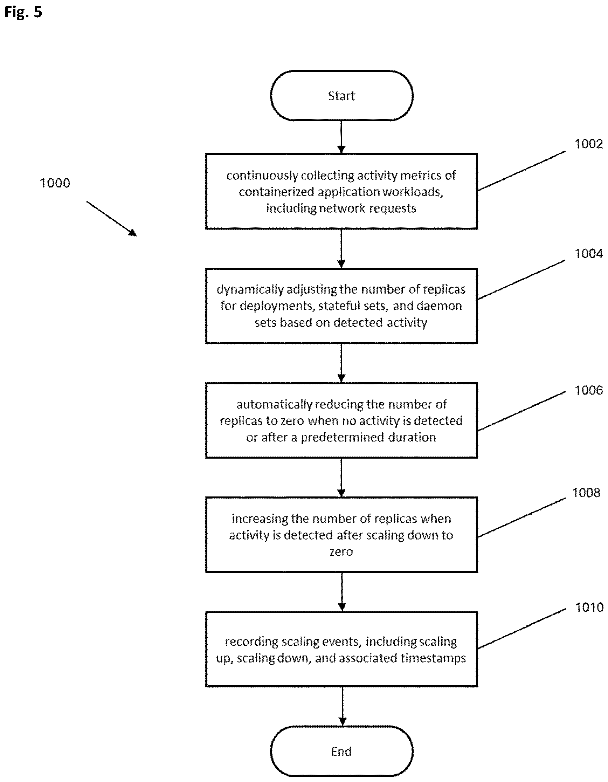

**Fig. 5** is a flowchart illustrating a preferred method 1000 for dynamically auto-scaling containerized application workloads, such as Kubernetes workloads. The method 1000 uses one or more data processing units, such as processors or virtual machines, for data processing, as well as memory and network infrastructure to store and transmit information efficiently.

At 1002, method 1000 includes continuously collecting activity metrics of containerized application workloads, including network requests. At 1004, it involves dynamically adjusting the number of replicas for deployments, stateful sets, and daemon sets based on detected activity.

At 1006, the method 1000 includes automatically reducing the number of replicas to zero when no activity is detected or after a predetermined duration. In other words, when a workload is idle for a predefined period (e.g., no new requests), the method or system preferably invokes a function called"ScaleToZero" to reduce the number of replicas to zero, minimizing resource usage.

Moreover, the system allows the scale-down duration (the period after which workloads are considered idle) to be configurable. The duration can be changed using a function called"ChangeScaleDownDuration", and the updated configuration is saved in persistent storage (MongoDB) using a function called"SaveScaleDownDuration" function.

At 1008, the number of replicas is increased when activity is detected after scaling down to zero. If an incoming network request is detected after a workload has been scaled to zero, a function called "ScaleUp" is preferably triggered to bring the workload back up online to gather the incoming network request by increasing its replica count to one.

At 1010, scaling events, including scaling up, scaling down, and associated timestamps are recorded.A history of all scaling actions can be logged in the log file and database, allowing users to view past events, including when and why workloads were scaled up or down. This is done through functions called"AddScalingHistory" and "GetScalingHistories".

### REFERENCE NUMERAL LIST

- 1: system
- 3: monitoring module
- 5: scaling module
- 7: logging module
- 9: metrics servers
- 11: Kubernetes cluster
- 13: user interface dashboard
- 15: line chart
- 17: table
- 1000: method
- 1002: method step
- 1004: method step
- 1006: method step
- 1008: method step
- 1010: method step

## Claims

1. A computer-implemented system (1) for dynamically auto-scaling containerized application workloads, such as Kubernetes workloads, comprising:
a. A monitoring module (3) configured to continuously collect activity metrics of containerized application workloads, including network requests;
b. A scaling module (5) configured to dynamically adjust the number of replicas for deployments, stateful sets, and daemon sets based on detected activity;
c. A scale-down mechanism configured to reduce the number of replicas to zero when no activity is detected automatically or for a predetermined duration;
d. A scale-up mechanism configured to increase the number of replicas when activity is detected after scaling down to zero;
e. A logging module (7) configured torecord scaling events, including scaling up, scaling down, and associated timestamps
wherein the system (1) further comprises one or more data processing units, such as processors or virtual machines, responsible for data processing, as well as memory and network infrastructure to store and transmit information, wherein the one or more data processing units and the memory and network infrastructure are configured to execute and/or provide the functionality of the aforementioned modules and mechanisms.

2. The system (1) according to claim 1, wherein the monitoring module (3) interfaces with external application programming interfaces, proxy servers, or metrics servers (9) to retrieve workload activity data.

3. The system (1) according to any of the preceding claims,wherein the monitoring module (3) is configured to analyze the collected metrics and to determine when to scale workloads up or down based on predefined thresholds and policies.

4. The system (1) according to claim 1 or claim 2, wherein the predetermined duration for scaling down workloads is configurable and stored in persistent storage.

5. The system (1) according to any of the preceding claims, wherein the logging module (7) is configured to maintain an audit history of scaling decisions for auditing and optimization purposes.

6. The system (1) according to any of the preceding claims, further comprising a user interface module to interact with the system (1) for monitoring, scaling, and logging configurations.

7. The system (1) according to any of the preceding claims, the scaling module (5) proactively triggers an immediate scale-up upon detecting new traffic or connection attempts based on the activity metrics, ensuring that an initial replica is available to handle requests efficiently.

8. A computer-implemented method (1000) for dynamically auto-scaling containerized application workloads, such as Kubernetes workloads, using one or more data processing units, such as processors or virtual machines, for data processing, as well as memory and network infrastructure to store and transmit information for the following method steps:
i. Continuously collecting (1002) activity metrics of containerized application workloads, including network requests;
ii. Dynamically adjusting (1004) the number of replicas for deployments, stateful sets, and daemon sets based on detected activity;
iii. Automatically reducing (1006) the number of replicas to zero when no activity is detected or after a predetermined duration;
iv. Increasing (1008) the number of replicas when activity is detected after scaling down to zero; and
v. Recording (1010) scaling events, including scaling up, scaling down, and associated timestamps.

9. The method (1000) according to claim 8, further comprising interfacing with external application programming interfaces, proxy servers, or metrics servers to retrieve workload activity data.

10. The method (1000) according to any of the preceding claims, further comprising analyzing the collected metrics and determining when to scale workloads up or down based on predefined thresholds and policies.

11. The method (1000) according to claim 9 or claim 10, wherein the predetermined duration for scaling down workloads is configurable and stored in persistent storage.

12. The method (1000) according to any of the preceding claims 9 - 11, further comprising maintaining an audit history of scaling decisions for auditing and optimization purposes.

13. The method (1000) according to any of the preceding claims 9 - 12, further comprising providing a user interface to interact with the system for monitoring, scaling, and logging configurations.

14. The method (1000) according to any of the preceding claims 9 - 13, further comprising proactively triggering an immediate scale-up upon detecting new traffic or connection attemptsbased on the activity metrics, ensuring that an initial replica is available to handle requests efficiently.

15. Use of the system (1) according to claim 1 - 7 and/or the method (1000) according to claim 8 - 14 for managing an e-commerce website, a database backend in a cloud environment, a video streaming service, development and testing environments, or loT systems.
